# EUROPÄISCHE PATENTANMELDUNG

(11) **EP 3 543 008 A1**
(43) Veröffentlichungstag der Anmeldung: **25.09.2019**
(21) Anmeldenummer: 18163639.0
(22) Anmeldetag: 23.03.2018
(51) Int. Cl.: B32B 27/06, B32B 37/18

(54) **WEICHE VOLUMENSTRUKTUR UND HERSTELLUNGSVERFAHREN DAFÜR**

(71) Anmelder: Siemens Aktiengesellschaft, 80333 München (DE)
(72) Erfinder: Jähnicke, Jens, 09112 Chemnitz (DE)

(57) **Zusammenfassung**

Zum Herstellen einer weichen Volumenstruktur (7) werden mittels eines additiven Aufbringungsverfahrens nacheinander Schichten (2) eines Materials in einer Schichtungsrichtung (x) aufeinander aufgebracht. Die Schichten (2) erstrecken sich jeweils in einer zur Schichtungsrichtung (x) orthogonalen Normalebene (3). Sie weisen in der jeweiligen Normalebene (3) jeweils eine Vielzahl von Feldbereichen (4, 5) auf, in denen sich das Material befindet. Zwischen den Feldbereichen (4, 5) befinden sich Leerbereiche, in denen sich kein Material befindet. Ein jeweiliger Vektor (V) von den Feldbereichen (4, 5) der jeweils zuerst aufgebrachten Schicht (2) zum jeweils nächstliegenden Feldbereich (4, 5) der unmittelbar danach aufgebrachten Schicht (2) weist eine in Schichtungsrichtung (x) gerichtete Schichtungskomponente (Vx) und eine in der Normalebene (3) liegende Normalkomponente (Vn) auf, so dass die Feldbereiche (4, 5) von aufeinander folgenden Schichten (2) in der Normalebene (3) gesehen um einen Versatz gegeneinander versetzt sind.

## Beschreibung

Die vorliegende Erfindung geht aus von einem Herstellungsverfahren für eine weiche Volumenstruktur.

Die vorliegende Erfindung geht weiterhin aus von einer weichen Volumenstruktur.

Zum Herstellen von weichen Volumenstrukturen werden die Volumenstrukturen oftmals aus einem Schaum eines entsprechenden Materials hergestellt. Zum Herstellen wird eine Form gefertigt, die dann mit dem entsprechenden Material ausgeschäumt wird. Die Form ist erforderlich, um dem Schaum die gewünschte Geometrie zu geben. Sie muss extra gefertigt werden. Falls die weichen Bestandteile mit stabilen Bestandteilen kombiniert werden sollen (beispielsweise weiche Einsätze an stabilen Griffen), müssen die harten Bestandteile vor dem Ausschäumen in die Form gelegt werden oder alternativ die harten und die weichen Bestandteile nachträglich miteinander verbunden werden.

Die Aufgabe der vorliegenden Erfindung besteht darin, Möglichkeiten zu schaffen, mittels derer eine weiche Volumenstruktur auf einfache Weise hergestellt werden kann. Eine weitere Aufgabe der vorliegenden Erfindung besteht darin, eine entsprechende Volumenstruktur anzugeben.

Die erstgenannte Aufgabe wird durch ein Herstellungsverfahren mit den Merkmalen des Anspruchs 1 gelöst. Vorteilhafte Ausgestaltungen des Herstellungsverfahrens sind Gegenstand der abhängigen Ansprüche 2 bis 10.

Erfindungsgemäß wird ein Herstellungsverfahren für eine weiche Volumenstruktur geschaffen,
- wobei mittels eines additiven Aufbringungsverfahrens nacheinander Schichten eines Materials in einer Schichtungsrichtung aufeinander aufgebracht werden,
- wobei die Schichten sich jeweils in einer zur Schichtungsrichtung orthogonalen Normalebene erstrecken,
- wobei die Schichten in der jeweiligen Normalebene jeweils eine Vielzahl von Feldbereichen aufweisen, in denen sich das Material befindet,
- wobei sich zwischen den Feldbereichen Leerbereiche befinden, in denen sich kein Material befindet,
- wobei ein jeweiliger Vektor von den Feldbereichen der jeweils zuerst aufgebrachten Schicht zum jeweils nächstliegenden Feldbereich der unmittelbar danach aufgebrachten Schicht eine in Schichtungsrichtung gerichtete Schichtungskomponente und eine in der Normalebene liegende Normalkomponente aufweist, so dass die Feldbereiche von in Schichtungsrichtung aufeinander folgenden Schichten in der Normalebene gesehen um einen Versatz gegeneinander versetzt sind.

Die erfindungsgemäße Vorgehensweise basiert auf der Erkenntnis, dass additive Herstellungsverfahren viele Möglichkeiten zur Gestaltung von Produkten bieten und diese Möglichkeiten bei geeigneter Anwendung - so wie erfindungsgemäß definiert - auch zur Herstellung von weichen Volumenstrukturen angewendet werden können. Die Weichheit der gefertigten Volumenstruktur ist hierbei erheblich größer als die Weichheit des Materials selbst.

In einer möglichen Ausgestaltung der vorliegenden Erfindung ist vorgesehen,
- dass die Schichten eine erste Gruppe von mehreren in Schichtungsrichtung unmittelbar aufeinander folgenden Schichten und eine zweite Gruppe von mehreren in Schichtungsrichtung unmittelbar aufeinander folgenden Schichten bilden,
- dass innerhalb der ersten Gruppe und innerhalb der zweiten Gruppe der jeweilige Vektor einheitlich derselbe ist und
- dass die Normalkomponenten der Vektoren der Schichten der zweiten Gruppe entgegengesetzt zu den Normalkomponenten der Vektoren der Schichten der ersten Gruppe gerichtet sind.

Besonders bevorzugt ist hierbei, wenn die Normalkomponenten der Vektoren der Schichten der zweiten Gruppe genauso groß wie die Normalkomponenten der Vektoren der Schichten der ersten Gruppe sind.

Durch derartige, im Wesentlichen winkelförmig verlaufende Strukturen kann eine Volumenstruktur geschaffen werden, die in der Schichtungsrichtung ähnlich wie eine einzelne Falte eines Faltenbalgs komprimiert werden kann.

Alternativ ist es beispielsweise möglich, dass die Normalkomponenten der Vektoren von Schicht zu Schicht jeweils um einen Winkel gegeneinander verdreht sind, so dass die Schichten eine helixartige Struktur bilden. In diesem Fall kann eine Volumenstruktur geschaffen werden, die in der Schichtungsrichtung ähnlich wie eine Schraubenfeder komprimiert werden kann.

Sowohl im erstgenannten Fall (Stichwort "winkelförmig verlaufende Strukturen") als auch im zweitgenannten Fall (Stichwort "helixartige Struktur") ist vorzugsweise vorgesehen, dass der Versatz der Feldbereiche von in Schichtungsrichtung unmittelbar aufeinander folgenden Schichten derart bestimmt ist, dass bei einer in Schichtungsrichtung gerichteten Projektion der Schichten die Feldbereiche von in Schichtungsrichtung unmittelbar aufeinander folgenden Schichten sich überlappen. Durch diese Vorgehensweise bleibt eine relativ große Bruchstabilität erhalten. Die Volumenstruktur ist also zwar weich (im Sinne von nachgiebig), aber dennoch reißfest.

In einer anderen Ausgestaltung der vorliegenden Erfindung ist vorgesehen,
- dass die Schichten jeweils eine Unterschicht und eine Oberschicht aufweisen,
- dass die jeweilige Unterschicht untere Feldbereiche aufweist und die jeweilige Oberschicht obere Feldbereiche aufweist und
- dass die unteren und die oberen Feldbereiche sich in Kreuzungsbereichen kreuzen.

Dadurch können sich die unteren und die oberen Feldbereiche beim Ausüben von Druck auf die weiche Volumenstruktur in der Schichtungsrichtung durchbiegen und so die Weichheit der Volumenstrukturen bewirken.

Analog zum Aufbringen der Schichten sequenziell nacheinander wird zum Aufbringen der jeweiligen Schicht in der Regel zunächst die Unterschicht der jeweiligen Schicht auf die Oberschicht der zuvor aufgebrachten Schicht aufgebracht und erst danach die Oberschicht der jeweiligen Schicht auf die Unterschicht der jeweiligen Schicht aufgebracht.

In dem Fall, dass die Schichten jeweils eine Unterschicht und eine Oberschicht aufweisen, ist der Versatz der Feldbereiche von in Schichtungsrichtung unmittelbar aufeinander folgenden Schichten vorzugsweise derart bestimmt, dass bei einer in Schichtungsrichtung gerichteten Projektion der Schichten die Feldbereiche von in Schichtungsrichtung unmittelbar aufeinander folgenden Schichten sich nicht überlappen. Durch diese Ausgestaltung kann die Weichheit der Volumenstruktur maximiert werden.

Vorzugsweise werden in diesem Fall die Kreuzungsbereiche einer jeweiligen Schicht relativ zu den Kreuzungsbereichen der in Schichtungsrichtung unmittelbar vorhergehenden Schicht auf Lücke angeordnet.

Das Material, aus dem die Schichten bestehen, kann nach Bedarf bestimmt sein. Vorzugsweise ist das Material ein thermoplastisches Polyurethan. Derartige Materialien sind Fachleuten unter der Abkürzung TPU bekannt.

Die zweitgenannte Aufgabe wird durch eine weiche Volumenstruktur mit den Merkmalen des Anspruchs 11 gelöst. Vorteilhafte Ausgestaltungen der Volumenstruktur sind Gegenstand der abhängigen Ansprüche 12 bis 18.

Erfindungsgemäß wird eine weiche Volumenstruktur bereitgestellt,
- wobei die Volumenstruktur Schichten eines Materials aufweist, die mittels eines additiven Aufbringungsverfahrens nacheinander in einer Schichtungsrichtung aufeinander aufgebracht sind,
- wobei die Schichten sich jeweils in einer zur Schichtungsrichtung orthogonalen Normalebene erstrecken,
- wobei die Schichten in der jeweiligen Normalebene jeweils eine Vielzahl von Feldbereichen aufweisen, in denen sich das Material befindet,
- wobei sich zwischen den Feldbereichen Leerbereiche befinden, in denen sich kein Material befindet,
- wobei ein jeweiliger Vektor von den Feldbereichen der jeweils zuerst aufgebrachten Schicht zum jeweils nächstliegenden Feldbereich der unmittelbar danach aufgebrachten Schicht eine in Schichtungsrichtung gerichtete Schichtungskomponente und eine in der Normalebene liegende Normalkomponente aufweist, so dass die Feldbereiche von in Schichtungsrichtung aufeinander folgenden Schichten in der Normalebene gesehen um einen Versatz gegeneinander versetzt sind.

Die Volumenstruktur entspricht also im Ergebnis einer Volumenstruktur, die mittels eines erfindungsgemäßen Herstellungsverfahrens hergestellt wurde.

Die vorteilhaften Ausgestaltungen der Volumenstruktur korrespondieren im Wesentlichen mit den vorteilhaften Ausgestaltungen des Herstellungsverfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Einrichtung zum Aufbringen von Schichten aufeinander beim Aufbringen einer Schicht,
- FIG 2: eine einzelne Schicht in der Draufsicht,
- FIG 3: eine Anzahl von übereinander angeordneten Schichten,
- FIG 4: eine Draufsicht auf Feldbereiche aufeinander folgender Schichten,
- FIG 5: eine Draufsicht auf Feldbereiche aufeinander folgender Schichten,
- FIG 6: zwei Normalkomponenten,
- FIG 7: eine Anzahl von übereinander angeordneten Schichten,
- FIG 8: mehrere aufeinander folgende Normalkomponenten,
- FIG 9: eine Draufsicht auf Feldbereiche aufeinander folgende Schichten,
- FIG 10: eine Anzahl von übereinander angeordneten Schichten,
- FIG 11: eine Einrichtung zum Aufbringen von Schichten aufeinander beim Aufbringen einer Unterschicht,
- FIG 12: eine Einrichtung zum Aufbringen von Schichten aufeinander beim Aufbringen einer Oberschicht und
- FIG 13: eine Schicht und Feldbereiche einer unmittelbar angrenzenden Schicht.

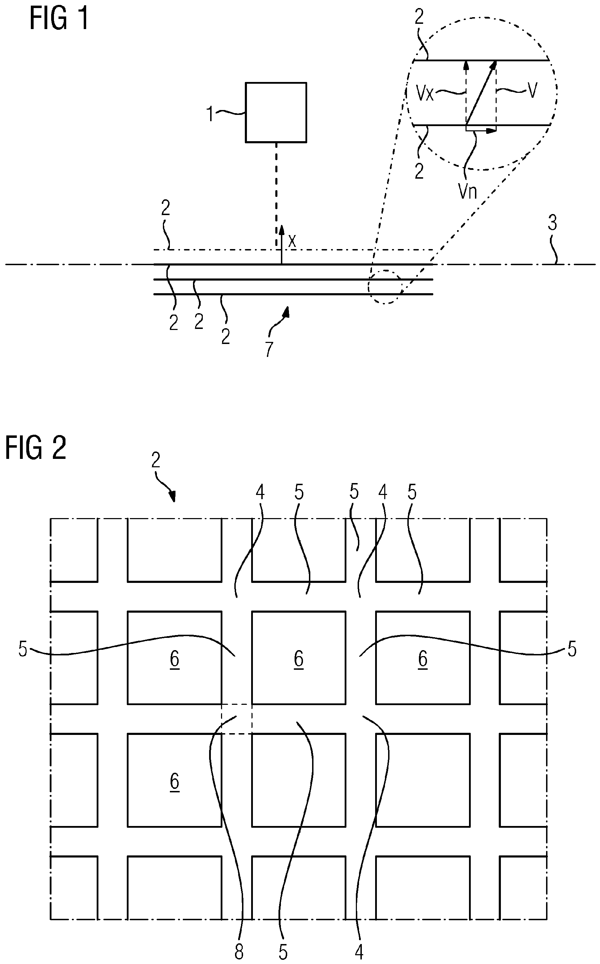

Gemäß der schematischen Darstellung in FIG 1 werden von einer Aufbringeinrichtung 1 mittels eines additiven Aufbringungsverfahrens nacheinander in einer Schichtungsrichtung x Schichten 2 eines - prinzipiell beliebigen - Materials aufeinander aufgebracht. Die momentan aufgebrachte Schicht 2 ist in FIG 1 gestrichelt dargestellt. Bei dem Material kann es sich beispielsweise um ein thermoplastisches Polyurethan handeln. Alternativ kann es sich um einen anderen Kunststoff, in Einzelfällen sogar um ein Metall handeln, beispielsweise Kupfer oder Stahl. Derartige Aufbringeinrichtungen 1 und die zugehörigen Aufbringverfahren sind Fachleuten allgemein bekannt. Beispielsweise arbeiten sogenannte 3-D-Drucker nach diesem Prinzip.

Die Schichten 2 erstrecken sich in einer jeweiligen Normalebene 3, in FIG 1 strichpunktiert dargestellt. Die Normalebenen 3 erstrecken sich orthogonal zur Schichtungsrichtung x. FIG 2 zeigt - stellvertretend für alle Schichten 2 - eine einzelne Schicht 2. Gemäß FIG 2 weist die Schicht 2 in der jeweiligen Normalebene 3 eine Vielzahl von Feldbereichen 4, 5 auf. In den Feldbereichen befindet sich das Material, aus dem die Schichten 2 bestehen.

Zwischen den Feldbereichen 4, 5 befinden sich Leerbereiche 6. In den Leerbereichen 6 befindet sich kein Material. Die jeweilige Schicht 2 ist somit eine offene Struktur. Ein Verhältnis, zu dem die Feldbereiche 4, 5 die jeweilige Schicht 2 füllen, kann in einem weiten Bereich variieren. Es ist - je nach Lage des Einzelfalls - möglich, dass die Feldbereiche 4, 5 nur wenige Prozent der gesamten Schicht 2 ausfüllen. Es sind aber auch größere Prozentanteile möglich, sogar weit über 50 %.

Es ist möglich, dass die Feldbereiche 4, 5 voneinander getrennt sind. Beispielsweise können die Feldbereiche 4, 5 gerade Strukturen bilden oder geschwungene (beispielsweise sinusförmig geschwungene) oder zickzackförmig verlaufende Strukturen bilden, die um eine in der Normalebene 3 verlaufende Hauptrichtung moduliert sind. Auch ist es - rein beispielhaft - möglich, dass die Feldbereiche 4, 5 kreisförmig ausgebildet sind, wobei der jeweilige Kreis sinusartig moduliert ist oder zickzackförmig verläuft. Auch andere Ausgestaltungen sind möglich. Gemäß FIG 2 umfassen die Feldbereiche 4, 5 jedoch zum einen Knotenpunkte 4, zum anderen Verbindungsstreben 5. In diesem Fall - wenn also die Schichten 2 die Knotenpunkte 4 und die Verbindungsstreben 5 umfassen - erstrecken sich die Verbindungsstreben 5 zwischen den Knotenpunkten 4 und verbinden die Knotenpunkte 4 miteinander. Weiterhin umschließen in diesem Fall die Knotenpunkte 4 und die Verbindungsstreben 5 die Leerbereiche 6. Die Knotenpunkte 4 sind dadurch definiert, dass von ihnen jeweils mindestens drei Verbindungsstreben 5 zu anderen Knotenpunkten 4 ausgehen. Die Verbindungsstreben 5 wiederum sind umgekehrt dadurch definiert, dass sie jeweils genau zwei Knotenpunkte 4 miteinander verbinden. Von den Knotenpunkten 4, den Verbindungsstreben 5 und den Leerbereichen 6 sind in FIG 2 nur einige mit ihrem Bezugszeichen versehen, um FIG 2 nicht zu überfrachten.

Entsprechend der Darstellung in FIG 2 bilden die Knotenpunkte 4 ein regelmäßiges rechteckiges (insbesondere quadratisches) Raster. Dies ist jedoch nicht zwingend erforderlich. Die Knotenpunkte 4 könnten ebenso beispielsweise Dreiecke (insbesondere gleichseitigen Dreiecke) oder Sechsecke (insbesondere regelmäßige Sechsecke bilden. Die Verbindungsstreben 5 sind in der Darstellung gemäß FIG 2 gerade ausgebildet. Auch dies ist jedoch nicht zwingend erforderlich. Sie könnten beispielsweise geschwungen sein, so dass die Zwischenräume 6 beispielsweise kreisförmig ausgebildet sind.

Die Schichten 2 sind zwar untereinander gleichartig ausgebildet. Die Feldbereiche 4, 5 von aufeinander folgenden Schichten 2 sind jedoch in der Normalebene 3 gesehen um einen Versatz gegeneinander versetzt. Ein jeweiliger Vektor V von den Feldbereichen 4, 5 einer der Schichten 2 zum jeweils nächstliegenden Feldbereich 4, 5 der jeweils nachfolgenden Schicht 2 - beispielsweise der entsprechende Vektor V von einem der Knotenpunkte 4 einer Schicht 2 zum nächstliegenden Knotenpunkt 4 der nachfolgenden Schicht 2 - weist daher nicht nur eine in Schichtungsrichtung x gerichtete Schichtungskomponente Vx auf, sondern zusätzlich auch eine in der Normalebene 3 liegende Normalkomponente Vn. Dies ist in FIG 1 für einen der Knotenpunkte 4 einer Schicht 2 und den benachbarten Knotenpunkt 4 der benachbarten Schicht 2 dargestellt. Durch den Versatz der Schichten 2 gegeneinander wird erreicht, dass die Weichheit (= Nachgiebigkeit) einer durch die Schichten 2 in ihrer Gesamtheit gebildeten Volumenstruktur 7 erheblich größer ist als die Weichheit des Materials, aus dem die Schichten 2 selbst bestehen. Die Volumenstruktur 7 ist daher eine weiche Volumenstruktur.

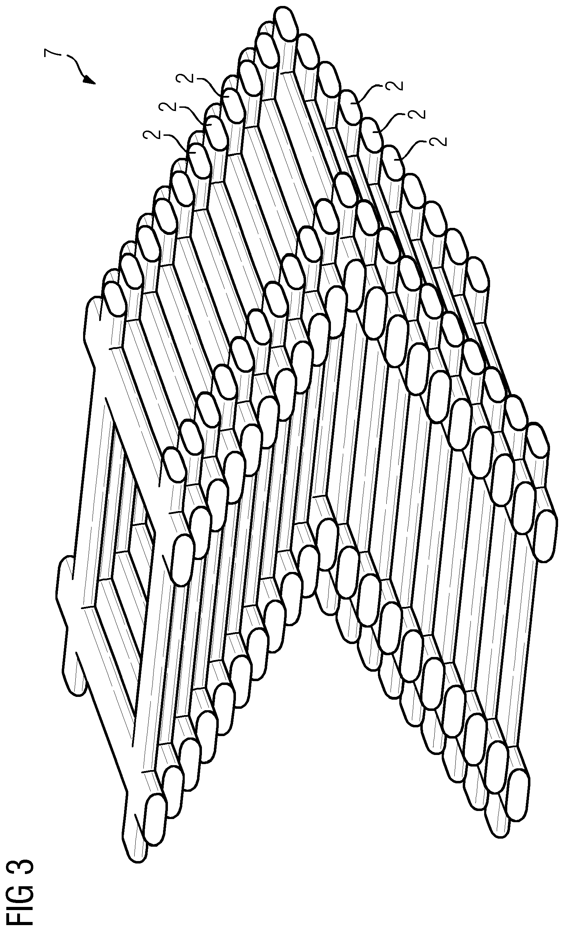

Gemäß FIG 3 ist es möglich, dass die Schichten 2 eine erste Gruppe und eine zweite Gruppe von Schichten 2 bilden. Von den Schichten 2 sind in FIG 3 nur einige mit ihrem Bezugszeichen versehen, um FIG 3 nicht zu überfrachten. Weiterhin ist in FIG 3 ist der Übersichtlichkeit halber pro Schicht 2 nur eine einzelne Zelle dargestellt, d.h. einer der Leerbereiche 6, der von den zugehörigen Feldbereichen 4, 5 umgeben ist. Die Schichten 2 erstrecken sich aber über erheblich größere Bereiche, beispielsweise 50 x 50 Zellen.

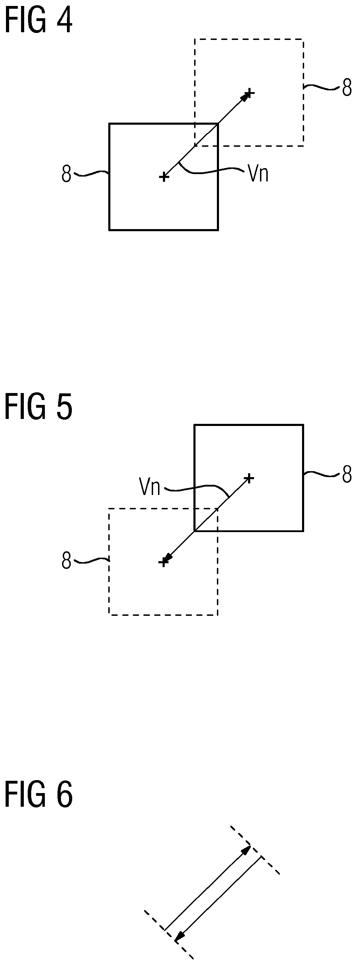

Die beiden Gruppen weisen ersichtlich jeweils mehrere unmittelbar aufeinander folgende Schichten 2 auf. Innerhalb der ersten Gruppe ist der jeweilige Vektor V einheitlich derselbe. Die Normalkomponente Vn ist daher entsprechend der Darstellung in FIG 4 innerhalb der ersten Gruppe daher ebenfalls einheitlich. Innerhalb der zweiten Gruppe ist der jeweilige Vektor V ebenfalls einheitlich derselbe. Die Normalkomponente Vn ist daher entsprechend der Darstellung in FIG 5 innerhalb der zweiten Gruppe ebenfalls einheitlich. Die Normalkomponenten Vn der Schichten 2 der zweiten Gruppe sind jedoch entgegengesetzt zu den Normalkomponenten Vn der Schichten 2 der ersten Gruppe gerichtet. Besonders deutlich ist dies aus FIG 6 ersichtlich, in der die Normalkomponenten Vn der Schichten 2 der ersten und der zweiten Gruppe einander gegenübergestellt sind.

Gemäß den FIG 3 bis 6 sind die Normalkomponenten Vn der Schichten 2 der zweiten Gruppe genauso groß wie die Normalkomponenten Vn der Schichten 2 der ersten Gruppe. Diese Ausgestaltung ist bevorzugt, aber nicht zwingend.

Der Versatz der Feldbereiche 4, 5 von unmittelbar aufeinander folgenden Schichten 2 ist entsprechend der Darstellung der FIG 3 bis 5 vorzugsweise derart bestimmt, dass bei einer in Schichtungsrichtung x gerichteten Projektion der Schichten 2 die Feldbereiche 4, 5 von unmittelbar aufeinander folgenden Schichten 2 sich überlappen. Dargestellt ist dies in FIG 2 für einen der Knotenpunkte 4. Der Sachverhalt ist aber auch bei einer anderen Ausgestaltung der Schichten 2 gültig.

Die Anzahl an Schichten 2 der ersten Gruppe ist vorzugsweise derart bestimmt, dass der Versatz der Knotenpunkte 4 der ersten und der letzten Schicht 2 der ersten Gruppe so groß ist, dass bei einer in Schichtungsrichtung x gerichteten Projektion der Schichten 2 die Feldbereiche 4, 5 der Schichten 2 der ersten Gruppe nach und nach immer weiter versetzt werden, so dass der Gesamtversatz größer als die Breite der Feldbereiche 4, 5 ist. Insbesondere ist die Anzahl an Schichten 2 der ersten Gruppe vorzugsweise derart bestimmt, dass dies sogar für die Feldbereiche 4, 5 der ersten und der mittleren Schicht 2 und demzufolge auch für die Feldbereiche 4, 5 der mittleren und der letzten Schicht 2 der ersten Gruppe gilt. Analoge Ausführungen gelten für die Schichten 2 der zweiten Gruppe.

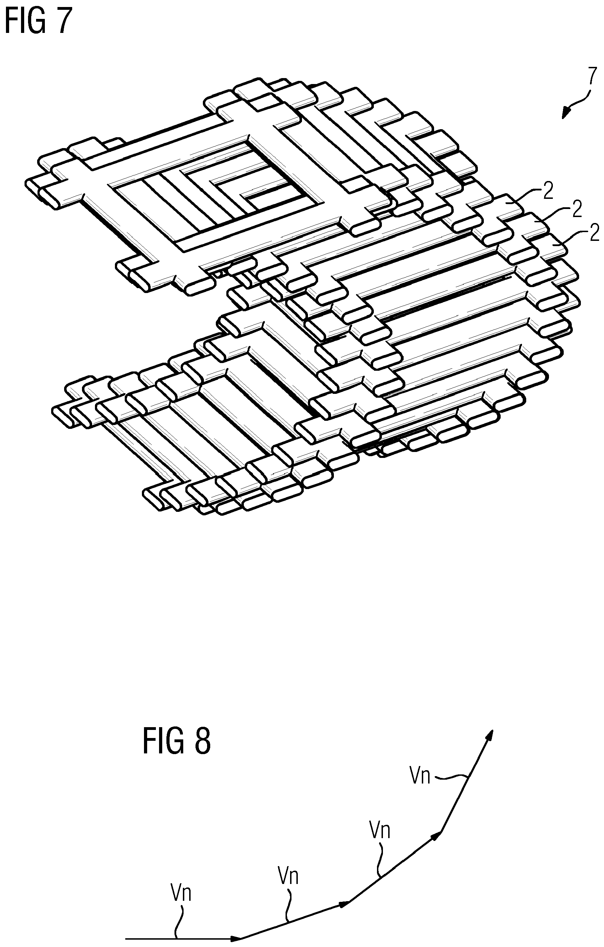

Alternativ ist es gemäß FIG 7 möglich, dass die Schichten 2 eine helixartige Struktur bilden. In diesem Fall sind die Normalkomponenten Vn entsprechend der Darstellung in FIG 8 von Schicht 2 zu Schicht 2 jeweils um einen Winkel α gegeneinander verdreht. Der Winkel α ist relativ klein. Beispielsweise kann er im Bereich zwischen 2° und 30° liegen insbesondere zwischen 5° und 15°.

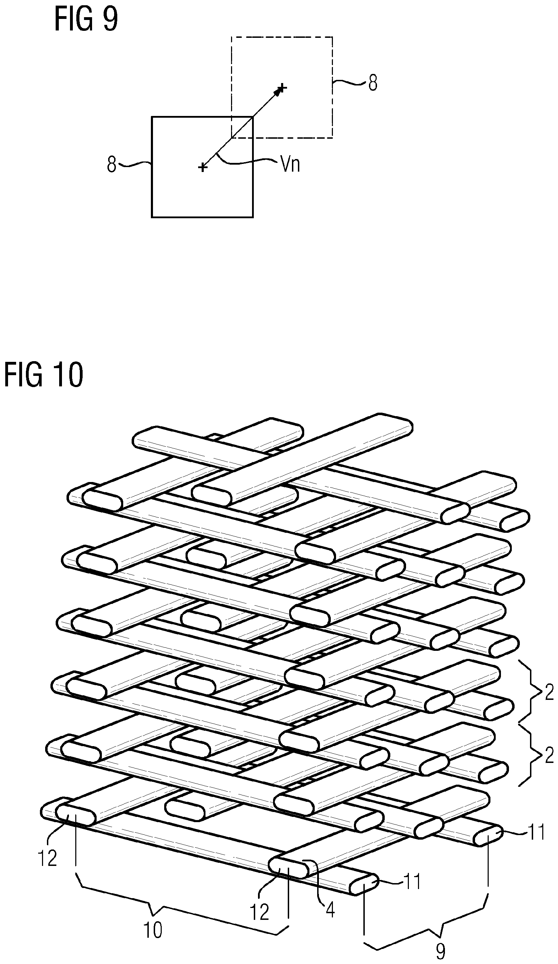

Der Versatz der Feldbereiche 4, 5 unmittelbar aufeinander folgender Schichten 2 ist auch im Falle der Ausgestaltung gemäß der FIG 7 und 8 entsprechend der Darstellung der FIG 9 vorzugsweise derart bestimmt, dass bei einer in Schichtungsrichtung x gerichteten Projektion der Schichten 2 die Feldbereiche 4, 5 von unmittelbar aufeinander folgenden Schichten 2 sich überlappen. Der Versatz ist mit dem Winkel α vorzugsweise derart abgestimmt, dass ein Kreis, den die benachbarten Bereiche 4, 5 der Schichten 2 - bzw., hiermit äquivalent, die Normalkomponenten Vn - beschreiben, erheblich größer als die Breite der Feldbereiche 4, 5 ist. Insbesondere ist der Versatz mit dem Winkel α vorzugsweise derart abgestimmt, dass bereits die Feldbereiche 4, 5 von Schichten 2, deren Normalkomponenten Vn so weit wie möglich orthogonal zueinander sind, einen Gesamtversatz aufweisen, der größer als die Breite der Feldbereiche 4, 5 ist.

FIG 10 zeigt eine weitere mögliche Ausgestaltung. In diesem Fall weisen die Schichten 2 jeweils eine Unterschicht 9 und eine Oberschicht 10 auf. Die jeweilige Unterschicht 9 weist untere Feldbereiche 11 auf, die jeweilige Oberschicht 10 obere Feldbereiche 12. Die oberen und die unteren Feldbereiche 11, 12 bilden zusammen die Verbindungsstreben 5 der jeweiligen Schicht 2. Die unteren Feldbereiche 11 erstrecken sich gemäß FIG 10 alle in einer ersten Richtung der Normalebene 3. In analoger Weise erstrecken sich gemäß FIG 10 die oberen Feldbereiche 12 alle in einer zweiten Richtung der Normalebene 3. Die zweite Richtung ist von der ersten Richtung linear unabhängig. Vorzugsweise ist sie orthogonal zur ersten Richtung. Weder die orthogonale Erstreckung noch die Erstreckung allgemein in einer ersten bzw. zweiten Richtung der Normalebene 3 ist jedoch zwingend erforderlich. Entscheidend ist, dass sich die unteren und die oberen Feldbereiche 11, 12 in Kreuzungsbereichen kreuzen. Die Kreuzungsbereiche bilden die Knotenpunkte 4 der jeweiligen Schicht 2. In FIG 10 sind der Übersichtlichkeit halber nur einige der Schichten 2, Unterschichten 9, Oberschichten 10, Verbindungsstreben 5, oberen und unteren Verbindungsstreben 11, 12 sowie Knotenpunkte 4 mit ihrem jeweiligen Bezugszeichen versehen.

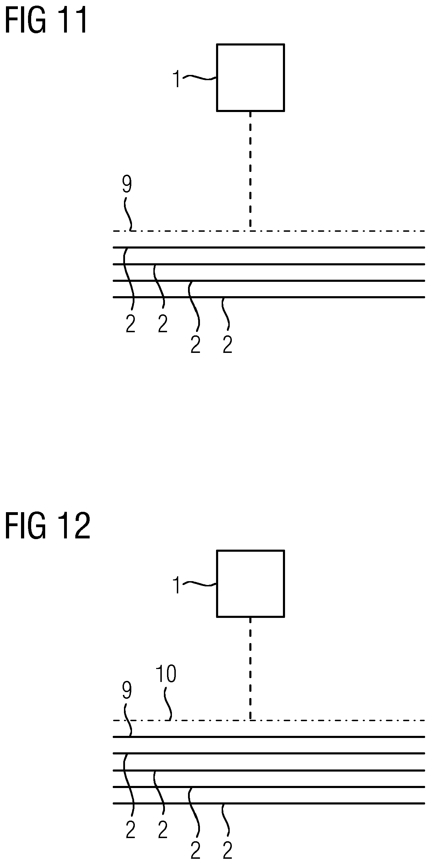

Im Falle der Ausgestaltung gemäß FIG 10 wird zum Aufbringen der jeweiligen Schicht 2 zunächst entsprechend der Darstellung in FIG 11 die Unterschicht 9 der jeweiligen Schicht 2 (in FIG 11 gestrichelt eingezeichnet) auf die zuvor aufgebrachte Schicht 2 (genauer: auf die Oberschicht 10 der zuvor aufgebrachten Schicht 2) aufgebracht. Danach wird entsprechend der Darstellung in FIG 12 die Oberschicht 10 der jeweiligen Schicht 2 (in FIG 12 gestrichelt eingezeichnet) auf die Unterschicht 9 der jeweiligen Schicht 2 aufgebracht.

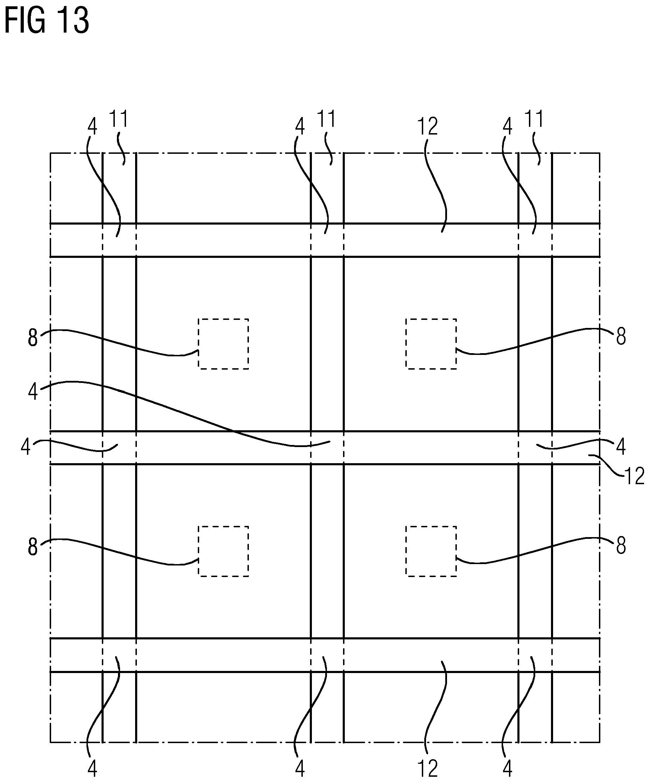

Im Falle der Ausgestaltung gemäß FIG 10 ist entsprechend der Darstellung in FIG 13 der Versatz der Feldbereiche 4, 5 unmittelbar aufeinander folgender Schichten 2 vorzugsweise derart bestimmt, dass bei einer in Schichtungsrichtung x gerichteten Projektion der Schichten 2 die Kreuzungsbereiche (Knotenpunkte 4) unmittelbar aufeinander folgender Schichten 2 sich nicht überlappen. FIG 13 zeigt dies dadurch, dass in FIG 13 eine Schicht 2 in der Draufsicht und zusätzlich die Knotenpunkte 4 einer unmittelbar angrenzenden Schicht 2 (es kann sich hier alternativ um die unmittelbar darüber oder um die unmittelbar darunter angeordnete Schicht 2 handeln) dargestellt sind. Die Knotenpunkte 4 der unmittelbar angrenzenden Schicht 2 sind in FIG 13 gestrichelt dargestellt.

FIG 13 zeigt zugleich auch die bevorzugte Ausgestaltung, gemäß der die Knotenpunkte 4 einer jeweiligen Schicht 2 - das sind in FIG 13 die gestrichelt dargestellten Knotenpunkte 4 - relativ zu den Knotenpunkten 4 der unmittelbar vorhergehenden Schicht 2 - das sind in FIG 13 die von den Kreuzungsbereichen der unteren und oberen Verbindungsstreben 11, 12 gebildeten Knotenpunkte 4 - auf Lücke angeordnet werden.

Zusammengefasst betrifft die vorliegende Erfindung somit folgenden Sachverhalt:
Zum Herstellen einer weichen Volumenstruktur 7 werden mittels eines additiven Aufbringungsverfahrens nacheinander Schichten 2 eines Materials in einer Schichtungsrichtung x aufeinander aufgebracht. Die Schichten 2 erstrecken sich jeweils in einer zur Schichtungsrichtung x orthogonalen Normalebene 3. Sie weisen in der jeweiligen Normalebene 3 jeweils eine Vielzahl von Feldbereichen (4, 5) auf, in denen sich das Material befindet. Zwischen den Feldbereichen (4, 5) befinden sich Leerbereiche, in denen sich kein Material befindet. Ein jeweiliger Vektor V von den Feldbereichen 4, 5 der jeweils zuerst aufgebrachten Schicht 2 zum jeweils nächstliegenden Feldbereich 4, 5 der unmittelbar danach aufgebrachten Schicht 2 weist eine in Schichtungsrichtung x gerichtete Schichtungskomponente Vx und eine in der Normalebene 3 liegende Normalkomponente Vn auf, so dass die Feldbereiche 4, 5 von aufeinander folgenden Schichten 2 in der Normalebene 3 gesehen um einen Versatz gegeneinander versetzt sind.

Die vorliegende Erfindung weist viele Vorteile auf. Insbesondere ist es auf einfache und kostengünstige Weise möglich, geometrisch sehr flexible Volumenstrukturen 7 zu erzeugen. Weiterhin ist es möglich, durch Abstimmung der verschiedenen Herstellungsparameter wie beispielsweise die Größe des Versatzes von Schicht 2 zu Schicht 2, die Größe des Winkels α und andere mehr die Weichheit der Volumenstrukturen 7 gezielt einzustellen. Die Weichheit kann in erheblich größerem Ausmaß variiert werden, als es mittels einer durch Ausschäumen hergestellten Volumenstruktur des Standes der Technik möglich ist. Weiterhin ist es möglich, die jeweilige Volumenstruktur 7 mit einer verbesserten Oberfläche auch an einer geneigten Fläche zu erzeugen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Herstellungsverfahren für eine weiche Volumenstruktur (7),
- wobei mittels eines additiven Aufbringungsverfahrens nacheinander Schichten (2) eines Materials in einer Schichtungsrichtung (x) aufeinander aufgebracht werden,
- wobei die Schichten (2) sich jeweils in einer zur Schichtungsrichtung (x) orthogonalen Normalebene (3) erstrecken,
- wobei die Schichten (2) in der jeweiligen Normalebene (3) jeweils eine Vielzahl von Feldbereichen (4, 5) aufweisen, in denen sich das Material befindet,
- wobei sich zwischen den Feldbereichen (4, 5) Leerbereiche (6) befinden, in denen sich kein Material befindet,
- wobei ein jeweiliger Vektor (V) von den Feldbereichen (4, 5) der jeweils zuerst aufgebrachten Schicht (2) zum jeweils nächstliegenden Feldbereich (4, 5) der unmittelbar danach aufgebrachten Schicht (2) eine in Schichtungsrichtung (x) gerichtete Schichtungskomponente (Vx) und eine in der Normalebene (3) liegende Normalkomponente (Vn) aufweist, so dass die Feldbereiche (4, 5) von in Schichtungsrichtung (x) aufeinander folgenden Schichten (2) in der Normalebene (3) gesehen um einen Versatz gegeneinander versetzt sind.

2. Herstellungsverfahren nach Anspruch 1,
**dadurch gekennzeichnet,**
- **dass** die Schichten (2) eine erste Gruppe von mehreren in Schichtungsrichtung (x) unmittelbar aufeinander folgenden Schichten (2) und eine zweite Gruppe von mehreren in Schichtungsrichtung (x) unmittelbar aufeinander folgenden Schichten (2) bilden,
- **dass** innerhalb der ersten Gruppe und innerhalb der zweiten Gruppe der jeweilige Vektor (V) einheitlich derselbe ist und
- **dass** die Normalkomponenten (Vn) der Vektoren (V) der Schichten (2) der zweiten Gruppe entgegengesetzt zu den Normalkomponenten (V kleinen) der Vektoren (V) der Schichten (2) der ersten Gruppe gerichtet sind.

3. Herstellungsverfahren nach Anspruch 2,
**dadurch gekennzeichnet,**
**dass** die Normalkomponenten (Vn) der Vektoren (V) der Schichten (2) der zweiten Gruppe genauso groß wie die Normalkomponenten (Vn) der Vektoren (V) der Schichten (2) der ersten Gruppe sind.

4. Herstellungsverfahren nach Anspruch 1,
**dadurch gekennzeichnet,**
**dass** die Normalkomponenten (Vn) der Vektoren (V) von Schicht (2) zu Schicht (2) jeweils um einen Winkel (α) gegeneinander verdreht sind, so dass die Schichten (2) eine helixartige Struktur bilden.

5. Herstellungsverfahren nach Anspruch 2, 3 oder 4,
**dadurch gekennzeichnet,**
**dass** der Versatz der Feldbereiche (4, 5) von in Schichtungsrichtung (x) unmittelbar aufeinander folgenden Schichten (2) derart bestimmt ist, dass bei einer in Schichtungsrichtung (x) gerichteten Projektion der Schichten (2) die Feldbereiche (4, 5) von in Schichtungsrichtung (x) unmittelbar aufeinander folgenden Schichten (2) sich überlappen.

6. Herstellungsverfahren nach Anspruch 1,
**dadurch gekennzeichnet,**
- **dass** die Schichten (2) jeweils eine Unterschicht (9) und eine Oberschicht (10) aufweisen,
- **dass** die jeweilige Unterschicht (9) untere Feldbereiche (11) aufweist und die jeweilige Oberschicht (10) obere Feldbereiche (12) aufweist und
- **dass** die unteren und die oberen Feldbereiche (11, 12) sich in Kreuzungsbereichen kreuzen.

7. Herstellungsverfahren nach Anspruch 6,
**dadurch gekennzeichnet,**
**dass** zum Aufbringen der jeweiligen Schicht (2) zunächst die Unterschicht (9) der jeweiligen Schicht (2) auf die zuvor aufgebrachte Schicht (2) aufgebracht wird und erst danach die Oberschicht (10) der jeweiligen Schicht (2) auf die Unterschicht (9) der jeweiligen Schicht (2) aufgebracht wird.

8. Herstellungsverfahren nach Anspruch 6 oder 7,
**dadurch gekennzeichnet,**
**dass** der Versatz der Feldbereiche (4, 5) von in Schichtungsrichtung (x) unmittelbar aufeinander folgenden Schichten (2) derart bestimmt ist, dass bei einer in Schichtungsrichtung (x) gerichteten Projektion der Schichten (2) die Kreuzungsbereiche von in Schichtungsrichtung (x) unmittelbar aufeinander folgenden Schichten (2) sich nicht überlappen.

9. Herstellungsverfahren nach Anspruch 8,
**dadurch gekennzeichnet,**
**dass** die Kreuzungsbereiche einer jeweiligen Schicht (2) relativ zu den Kreuzungsbereichen der in Schichtungsrichtung (x) unmittelbar vorhergehenden Schicht (2) auf Lücke angeordnet werden.

10. Herstellungsverfahren nach einem der obigen Ansprüche,
**dadurch gekennzeichnet,**
**dass** das Material ein thermoplastisches Polyurethan ist.

11. Weiche Volumenstruktur,
- wobei die Volumenstruktur Schichten (2) eines Materials aufweist, die mittels eines additiven Aufbringungsverfahrens nacheinander in einer Schichtungsrichtung (x) aufeinander aufgebracht sind,
- wobei die Schichten (2) sich jeweils in einer zur Schichtungsrichtung (x) orthogonalen Normalebene (3) erstrecken,
- wobei die Schichten (2) in der jeweiligen Normalebene (3) jeweils eine Vielzahl von Feldbereichen (4, 5) aufweisen, in denen sich das Material befindet,
- wobei sich zwischen den Feldbereichen (4, 5) Leerbereiche (6) befinden, in denen sich kein Material befindet,
- wobei ein jeweiliger Vektor (V) von den Feldbereichen (4, 5) der jeweils zuerst aufgebrachten Schicht (2) zum jeweils nächstliegenden Feldbereich (4, 5) der unmittelbar danach aufgebrachten Schicht (2) eine in Schichtungsrichtung (x) gerichtete Schichtungskomponente (Vx) und eine in der Normalebene (3) liegende Normalkomponente (Vn) aufweist, so dass die Feldbereiche (4, 5) von in Schichtungsrichtung (x) aufeinander folgenden Schichten (2) in der Normalebene (3) gesehen um einen Versatz gegeneinander versetzt sind.

12. Volumenstruktur nach Anspruch 11,
**dadurch gekennzeichnet,**
- **dass** die Schichten (2) eine erste Gruppe von mehreren in Schichtungsrichtung (x) unmittelbar aufeinander folgenden Schichten (2) und eine zweite Gruppe von mehreren in Schichtungsrichtung (x) unmittelbar aufeinander folgenden Schichten (2) bilden,
- **dass** innerhalb der ersten Gruppe und innerhalb der zweiten Gruppe der jeweilige Vektor (V) einheitlich derselbe ist und
- **dass** die Normalkomponenten (Vn) der Vektoren (V) der Schichten (2) der zweiten Gruppe entgegengesetzt zu den Normalkomponenten (Vn) der Vektoren (V) der Schichten (2) der ersten Gruppe gerichtet sind.

13. Volumenstruktur nach Anspruch 12,
**dadurch gekennzeichnet,**
**dass** die Normalkomponenten (Vn) der Vektoren (V) der Schichten (2) der zweiten Gruppe genauso groß wie die Normalkomponenten (Vn) der Vektoren (V) der Schichten (2) der ersten Gruppe sind.

14. Volumenstruktur nach Anspruch 11,
**dadurch gekennzeichnet,**
**dass** die Normalkomponenten (Vn) der Vektoren (V) von Schicht (2) zu Schicht (2) jeweils um einen Winkel (α) gegeneinander verdreht sind, so dass die Schichten (2) eine helixartige Struktur bilden.

15. Volumenstruktur nach Anspruch 12, 13 oder 14,
**dadurch gekennzeichnet,**
**dass** der Versatz der Feldbereiche (4, 5) von in Schichtungsrichtung (x) unmittelbar aufeinander folgenden Schichten (2) derart bestimmt ist, dass bei einer in Schichtungsrichtung (x) gerichteten Projektion der Schichten (2) die Feldbereiche (4, 5) von in Schichtungsrichtung (x) unmittelbar aufeinander folgenden Schichten (2) sich überlappen.

16. Volumenstruktur nach Anspruch 11,
**dadurch gekennzeichnet,**
- **dass** die Schichten (2) jeweils eine Unterschicht (9) und eine Oberschicht (10) aufweisen,
- **dass** die jeweilige Unterschicht (9) untere Feldbereiche (11) aufweist und die jeweilige Oberschicht (10) obere Feldbereiche (12) aufweist und
- **dass** die unteren und die oberen Feldbereiche (11, 12) sich in Kreuzungsbereichen kreuzen.

17. Volumenstruktur nach Anspruch 16,
**dadurch gekennzeichnet,**
**dass** der Versatz der Feldbereiche (4, 5) von in Schichtungsrichtung (x) unmittelbar aufeinander folgenden Schichten (2) derart bestimmt ist, dass bei einer in Schichtungsrichtung (x) gerichteten Projektion der Schichten (2) die Kreuzungsbereiche von in Schichtungsrichtung (x) unmittelbar aufeinander folgenden Schichten (2) sich nicht überlappen.

18. Volumenstruktur nach Anspruch 17,
**dadurch gekennzeichnet,**
**dass** die Kreuzungsbereiche einer jeweiligen Schicht (2) relativ zu den Kreuzungsbereichen der in Schichtungsrichtung (x) unmittelbar vorhergehenden Schicht (2) auf Lücke angeordnet sind.

19. Volumenstruktur nach einem der Ansprüche 11 bis 18,
**dadurch gekennzeichnet,**
**dass** das Material ein thermoplastisches Polyurethan ist.
